# EUROPEAN PATENT APPLICATION

(11) **EP 0 813 344 A2**
(43) Date of publication of application: **17.12.1997**
(21) Application number: 97109400.8
(22) Date of filing: 10.06.1997
(51) Int. Cl.: H04N 9/804

(54) **Multi-channel recording/reproducing apparatus**

(30) Priority: 12.06.1996 JP 151257/96
(71) Applicant: KABUSHIKI KAISHA TOSHIBA, Kawasaki-shi (JP); NHK Technical Services, Inc., Tokyo 150 (JP)
(72) Inventor: Shigeo, Kizu, Seya-ku, Yokohama-shi (JP); Makoto, Horiguchi, Funabashi-shi, Chiba-ken (JP)
(74) Representative: Henkel, Feiler, Hänzel & Partner

(57) **Abstract**

An HDTV digital VTR (13) records/reproduces HDTV digital image data on/from a video tape (14). Mapping processing is performed for NTSC digital image data corresponding to a plurality of channels, each having fewer sampled data in the horizontal and vertical directions than HDTV digital image data, to constitute HDTV digital image data. The resultant data is recorded on a video tape (14) by the HDTV digital VTR (13). The NTSC digital image data corresponding to the plurality of channels are reconstructed from the image data reproduced from the video tape (14) by the HDTV digital VTR (13).

## Description

The present invention relates to a multi-channel recording/reproducing apparatus for efficiently recording/reproducing digital image data corresponding to a plurality of channels, each containing image information, audio information, time information, and the like and used as a program material, on a recording medium such as a video tape or the like.

As is known, in order to produce a television program, digital image data like the one described above which is used as a program material must be recorded on a video tape in many cases. In this case, the data amount of audio information is about 1 Mbps (Megabit Per Second) per channel. For this reason, by using a multi-track recorder or the like, for example, 48-channel audio information can be recorded on one tape.

In contrast to this, the data amount of image information is about 100 Mbps per channel. That is, the data amount of image information is 100 times or more larger than that of audio information. A general VTR (Video Tape Recorder) is not designed to ensure a recording data rate high enough to simultaneously record image information corresponding to a plurality of channels, each having such a large data amount, on only image information corresponding to one channel can be recorded by one VTR.

In recent years, multi-recording using so-called multi-television cameras has become widespread. In multi-recording, a plurality of television cameras are used to photograph the same object at various angles in a relay broadcast of, e.g., a concert or sport. When multi-recording is to be performed, VTRs must be prepared in correspondence with the number of television cameras to record pieces of image information obtained from the respective television cameras on tapes. These VTRs are mounted on a relay car or attendant car, together with the television cameras, to be at the site of the event.

The above conventional multi-recording means requires VTRs corresponding to the number of television cameras. In addition, the number of accessories, i.e., devices and cables, increases accordingly. For this reason, cumbersome operations are required to transport them and install/dismantle them on the site. In addition, since a plurality of VTRs are driven together with a plurality of television cameras, large power is consumed, resulting in economical disadvantages.

Most produced television programs are often stored for rebroadcasting and secondary use even after they are broadcasted. According to the prior art, such broadcasted video tapes are stored in a warehouse as they are. For this reason, a large space is required to store the video tapes, and it costs much to manage them. In addition, it is troublesome to search the warehouse for a necessary video tape, take it out, and return it.

In one system recently proposed as a means for solving such problems associated with the storage of video tapes, digital image data are compressed to minimize their data rates, and the compressed data are recorded on small recording media and stored. If, however, the compression technique is used, the image quality of data deteriorates more or less in principle. It is required that important program materials be stored as baseband data without any compression.

As described above, according to the prior art, one VTR can record only one-channel digital image data at a time. For this reason, when multi-recording is to be performed by using a plurality of television cameras, VTRs equal in number to the television cameras must be prepared. The number of accessory parts and devices increase accordingly, and meticulous operations are required to convey, install, and dismantle them. In addition, the power consumption increases, resulting in economical disadvantages.

Since only one-channel digital image data can be recorded by one VTR, a large number of video tapes must be used. For this reason, a large storage space is required to store video tapes on which produced television programs are recorded. With the use of the means for compressing digital image data to decrease their data rates so as to reduce the storage space, a deterioration in image quality inevitably occurs. For this reason, it is often preferred not to use such a means for important program materials.

The present invention has been made in consideration of the above situation, and has as its object to provide a multi-channel recording/reproducing apparatus which can simultaneously record/reproduce digital image data corresponding to a plurality of channels on/from the same recording medium without causing any deterioration in image quality, and can be effectively used for multi-recording and storage of recording media on which television programs are recorded.

According to one aspect of the present invention, there is provided a multi-channel recording/reproducing apparatus comprising:
a recording medium;
recording/reproducing means for recording/reproducing first digital image data on/from the recording medium;
a recorded signal processing section for performing mapping processing for second digital image data corresponding to a plurality of channels, each having fewer sampled data in a horizontal or vertical direction than the first digital image data, to constitute the first digital image data, and supplying the data to the recording/reproducing means to cause the means to record the data on the recording medium; and
a reproduction signal processing section for reconstructing the second digital image data corresponding to the plurality of channels from the image data reproduced from the recording medium by the recording/reproducing means.

According to the above arrangement, since second digital image data corresponding to a plurality of channels, each having fewer sampled data in the horizontal or vertical direction than first digital image data, are mapped to constitute the first digital image data, and the first digital image data is recorded/reproduced on/from a recording medium by using the recording/reproducing apparatus for recording/ reproducing first digital image data, digital image data corresponding to a plurality of channels can be simultaneously recorded/reproduced on/from the same recording medium without causing any deterioration in image quality. For this reason, the apparatus can be effectively used for multi-recording and storage of recording media on which television programs are recorded.

This invention can be more fully understood form the following detailed description when taken in conjunction with the accompanying drawings, in which:
FIG. 1 is a block diagram showing a multi-channel recording/reproducing apparatus according to an embodiment of the present invention to explain an example of the arrangement for a recording operation;
FIG. 2 is a block diagram for explaining another example of the arrangement for a recording operation in the embodiment;
FIG. 3 is a block diagram for explaining an example of the arrangement for a reproducing operation in the embodiment;
FIG. 4 is a block diagram showing the detailed arrangement of a recorded signal processing section in a multi-channel recording/reproducing unit in the embodiment;
FIG. 5 is a block diagram showing the detailed arrangement of a reproduction signal processing section in the multi-channel recording/reproducing unit in the embodiment;
FIG. 6 is a view for explaining the composition specifications that are used to combine an audio signal with an image signal in the embodiment;
FIG. 7 is a view for explaining the format of one-field NTSC digital image data; and
FIG. 8 is a view for explaining the format of one-field HDTV digital image data.

An embodiment of the present invention will be described in detail below with reference to the accompanying drawings. In this embodiment, NTSC (National Television System Committee) television signals corresponding to eight channels are simultaneously recorded or reproduced by using one HDTV (High Definition Television) digital VTR.

As this HDTV digital VTR, a cassette type baseband digital VTR called "Type D6" standardized by SMPTE (Society of Motion Picture and Television Engineers) is used. This VTR has the function of recording HDTV digital image data having a data rate of about one Gbps on a cassette video tape in a non-compressed form.

When an NTSC television signal is digitized, the resultant digital image data generally has a data rate of about 114 Mbps. As is apparent, therefore, NTSC digital image data corresponding to eight channels can be simultaneously recorded on a video tape by using the above HDTV digital VTR.

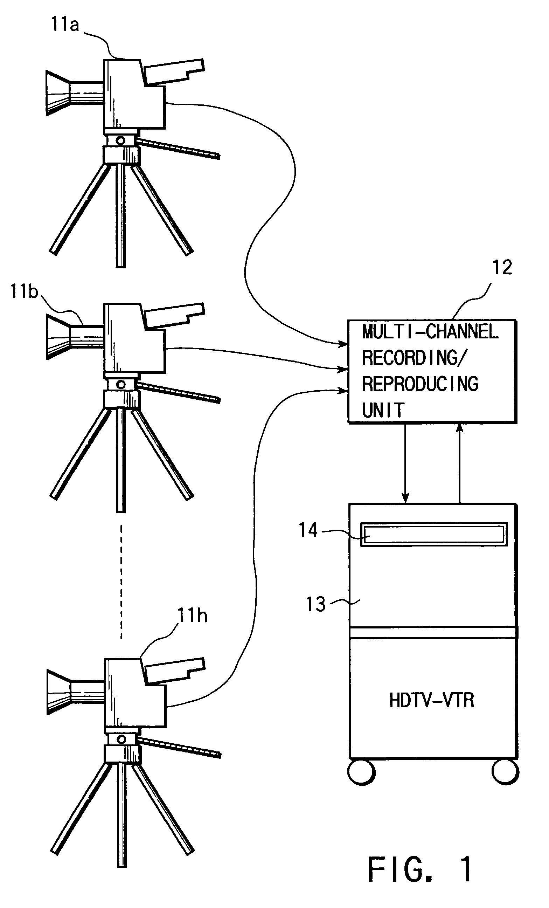

FIG. 1 shows an arrangement using eight television cameras 11a, 11b,..., 11h to obtain NTSC digital image data corresponding to eight channels. Each of the television cameras 11a, 11b,..., 11h generates digital image data by combining an image signal with an audio signal, and outputs the data to a multi-channel recording/reproducing unit 12.

The multi-channel recording/reproducing unit 12 multiplexes the input digital image data corresponding to the eight channels, and supplies the resultant data to an HDTV digital VTR 13. The HDTV digital VTR 13 records the multiplexed eight-channel digital image data on a cassette video tape 14.

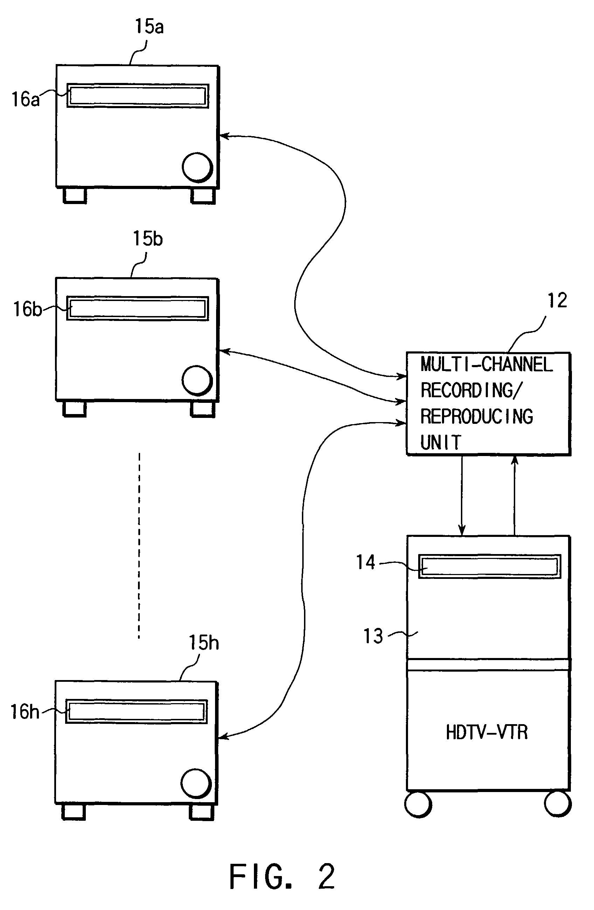

FIG. 2 shows another arrangement using eight VTRs 15a, 15b,..., 15h to obtain NTSC digital image data corresponding to eight channels. The VTRs 15a, 15b,..., 15h respectively play loaded cassette video tapes 16a, 16b,..., 16h, generate digital image signal by combining the obtained image signals, audio signals, and time code signals, and output the data to the multi-channel recording/reproducing unit 12.

As described above, the multi-channel recording/reproducing unit 12 multiplexes the input eight-channel digital image data, and supplies the resultant data to the HDTV digital VTR 13. The HDTV digital VTR 13 records the multiplexed eight-channel digital image data on the cassette video tape 14.

According to the arrangements shown in FIGS. 1 and 2, digital image data corresponding to eight channels, each containing various signals, e.g., an image signal, an audio signal, and a time signal, i.e., program materials corresponding to eight channels, are simultaneously recorded on the cassette video tape 14 loaded into the HDTV digital VTR 13.

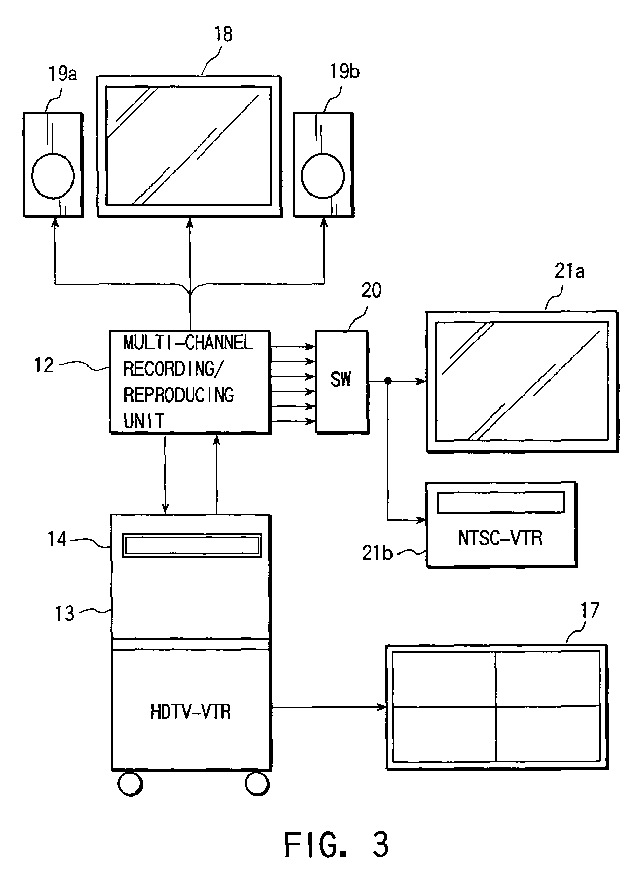

As shown in FIG. 3, the HDTV digital VTR 13 outputs the digital image data corresponding to the eight channels obtained by playing the cassette video tape 14 to an HDTV monitor 17 having an aspect ratio of 9 : 16, thereby displaying the corresponding image.

After being simultaneously reproduced by the HDTV digital VTR 13, the digital image data corresponding to the eight channels are supplied to the multi-channel recording/reproducing unit 12. The multi-channel recording/reproducing unit 12 reconstructs eight types of program materials by demultiplexing the input eight-channel digital image data in units of channels.

In this case, the multi-channel recording/reproducing unit 12 selects one-channel digital image data from the demultiplexed digital image data corresponding to the eight channels, and performs D/A (Digital/Analog) conversion to reconstruct an image signal and right and left audio signals. The multi-channel recording/reproducing unit 12 then outputs the reconstructed image signal to an NTSC monitor 18 having an aspect ratio of 3 : 4 to display the corresponding image, and outputs the right and left audio signals to loudspeakers 19a and 19b to generate sounds.

In addition to the above functions, the multi-channel recording/reproducing unit 12 has the function of outputting the demultiplexed digital image data corresponding to the eight channels as the digital data without any modification. A switcher 20 selects, usually, one-channel digital image data from the digital image data corresponding to the eight channels. The selected data is output to an NTSC monitor 21, thereby displaying the corresponding image, or output to a VTR 21b of NTSC type, thereby recording the image.

As described above, the eight types of program materials reconstructed by the multi-channel recording/reproducing unit 12 can be selectively switched and combined into a new television program. In addition, for example, a desired program material may be selected from the eight types of program materials reconstructed by the multi-channel recording/reproducing unit 12 to be edited.

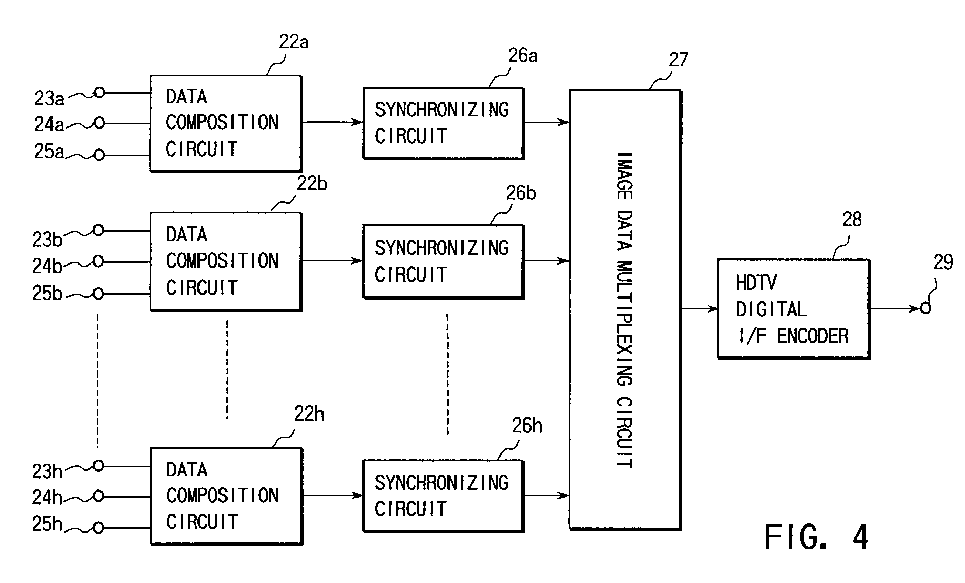

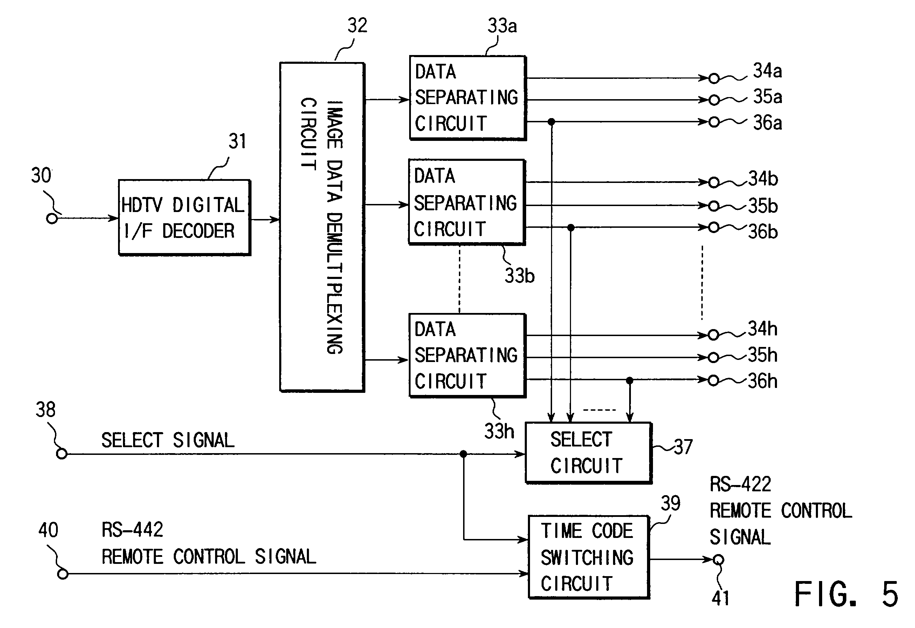

FIGS. 4 and 5 respectively show the detailed arrangements of a recorded signal processing section and a reproduction signal processing section in the multi-channel recording/reproducing unit 12. The recorded signal processing section multiplexes digital image data corresponding to eight channels, each containing an image signal, an audio signal having a maximum of four channels per channel of the image signal, and a time code signal TC. Thereafter, the recorded signal processing section converts the multiplexed eight-channel digital image data into data of the form conforming to the HDTV scheme, and outputs the resultant data to the HDTV digital VTR 13.

The reproduction signal processing section demultiplexes the multiplexed eight-channel HDTV digital image data reproduced by the HDTV digital VTR 13 into digital image data in units of channels. Thereafter, the reproduction signal processing section reconstructs or recovers the image signals, the audio signals, and the time code signal TC from the demultiplexed digital image data corresponding to the respective channels.

As shown in FIG. 4, the recorded signal processing section includes eight data composition circuits 22a, 22b,..., 22h corresponding to the above number of channels. The digital image signals are respectively supplied to the data composition circuits 22a, 22b,..., 22h through input terminals 23a, 23b,..., 23h.

In addition, the digital audio signals are respectively supplied to the data composition circuits 22a, 22b,..., 22h through input terminals 24a, 24b,..., 24h, and the time code signals TC are also supplied to the circuits 22a, 22b,..., 22h through input terminals 25a, 25b,..., 25h.

Note that if the image and audio signals input to the recorded signal processing section are analog signals, the signals must be converted into digital signals in advance by A/D (Analog/Digital) conversion processing before they are supplied to the data composition circuits 22a, 22b,..., 22h.

In some case, serial data like the one described in Proposed SMPTE Standard "SMPTE 259M" of SMPTE is transmitted as a digital image signal. In this case, since an ANC (Ancillary) data area which can be defined by the user is set in part of the serial data stream, a digital audio signal is transmitted by using this ANC data area.

In an NTSC composite system, a 4-channel digital audio signal can be transmitted in the blanking interval of a digital image signal. Such a method of transmitting digital audio signals is described in "SMPTE 272M".

When a digital audio signal is to be transmitted in the blanking interval of a digital image signal, the system uses a means for recording the effective image interval and blanking interval of the digital image signal on the cassette video tape 14 by using the HDTV digital VTR 13. When this means is used, the input terminals 24a, 24b,..., 24h in FIG. 4 to which digital audio signal are supplied are not required.

When the arrangement shown in FIG. 2 is used, the above time code signals TC are supplied to the data composition circuits 22a, 22b,..., 22h. When the arrangement shown in FIG. 1 is used, since the television cameras 11a, 11b,..., 11h simultaneously operate in real time, different time code signals need not be contained in digital image data and recorded in units of channels.

The data composition circuits 22a, 22b,..., 22h combine input digital image signals, input digital audio signals, and input digital time code signals TC to generate digital image data.

The format of digital image data output from each of the data composition circuits 22a, 22b,..., 22h will be described below.

Each of the digital image signals input to the data composition circuits 22a, 22b,..., 22h has 910 sampled data, including a horizontal blanking interval, in the horizontal direction (one sampled data corresponding to eight bits), and 525 lines per frame in the vertical direction.

For this reason, the format of each of the digital image data output from the data composition circuits 22a, 22b,..., 22h is designed such that all the 910 sampled data are recorded in the horizontal direction, considering that user data including a digital audio signal are multiplexed and transmitted in the blanking interval of a digital image signal according to the "SMPTE 259M" specifications.

In addition, the format of this digital image data is designed such that 520 lines (260 lines per field) are recorded per frame in the vertical direction, considering that the number of lines per frame which can be recorded by the HDTV digital VTR 13 is 1,040, and NTSC digital image signals corresponding to eight channels can be recorded by the HDTV digital VTR 13.

Note that the method of combining a digital audio signal with a digital image signal in each of the data composition circuits 22a, 22b,..., 22h conforms to "SMPTE 272M" so as to satisfactory cope with a case in which the digital image signal is serially transmitted according to the "SMPTE 259M" specifications, and a case in which the digital image signal and the digital audio signal are transmitted through different systems.

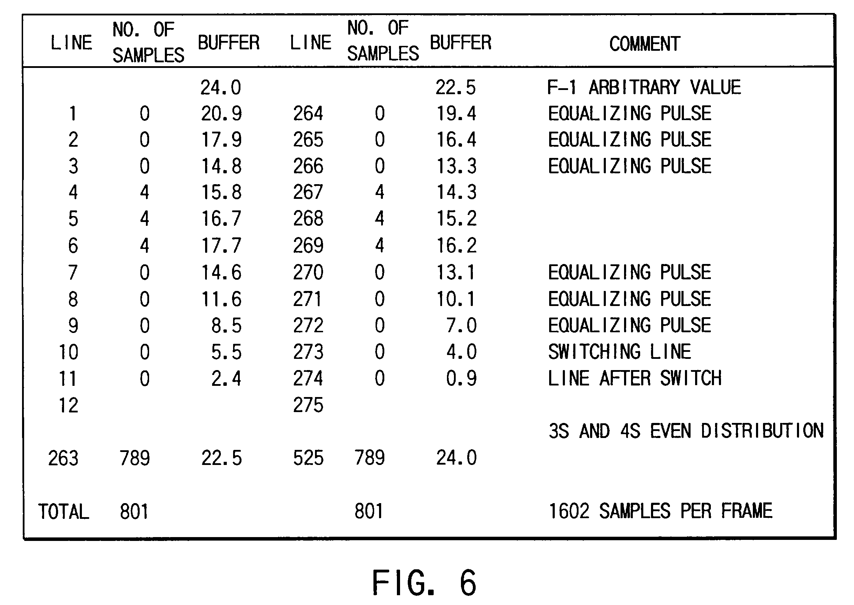

FIG. 6 shows the specifications that are used to combine a digital audio signal with a digital image signal on the basis of "SMPTE 272M". More specifically, four sampled digital audio signal data are multiplexed on lines 4 to 6 and lines 267 to 269 as the ANC data areas of a digital image signal. Similarly, three sampled digital audio signal data and four sampled digital audio signal data are evenly multiplexed every other line between lines 12 to 263 and lines 275 to 525 as the ANC areas of the digital image signal.

As is apparent from FIG. 6, since the ANC data areas of the digital image signal in the equalizing pulse intervals are not used, no special data need be recorded. In consideration of the number of lines (260) which can re recorded in the vertical direction in the HDTV scheme, lines 3 to 26 and lines 266 to 525 are set as effective recording lines.

Each of the time code signals TC supplied to the data composition circuits 22a, 22b,..., 22h is formed by adding four-byte user data and two-byte identification code to four-byte data indicating a hour/minute/second frame. The data amount of each time code signal to be combined with a digital image signal is 10 bytes per line. By recording the identical time code signals TC on the respective lines within one frame of a digital image signal, the reliability of the data can be ensured in a special reproduction operation.

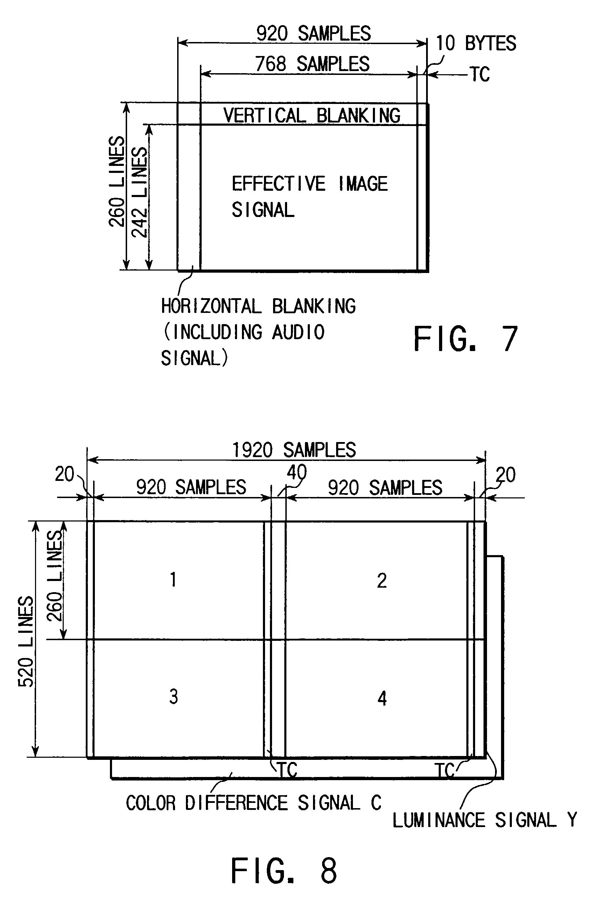

FIG. 7 shows the format of one-field digital image data generated per channel by each of the data composition circuits 22a, 22b,..., 22h by combining a digital image signal, a digital audio signal, and a digital time code signal TC with each other.

The digital image data output from the data composition circuits 22a, 22b,..., 22h are respectively supplied to synchronizing circuits 26a, 26b,..., 26h. The synchronizing circuits 26a, 26b,..., 26h absorb the phase differences between the respective digital image data input thereto.

More specifically, the synchronizing circuits 26a, 26b,..., 26h absorb the phase difference between output signals obtained from the signal sources corresponding to the eight channels (the television cameras 11a, 11b,..., 11h, the VTRs 15a, 15b,..., 15h, or the like) and used to generate image, audio, and time code signals and the like supplied to the data composition circuits 22a, 22b,..., 22h.

That is, the output signals obtained from these signal sources are generally phase-locked to eliminate the phase differences by supplying identical reference signals. It is, however, very difficult to keep the output signals perfectly in phase with each other; phase differences are produced in practice. For this reason, the phase differences between the respective output signals are absorbed by the synchronizing circuits 26a, 26b,..., 26h.

These synchronizing circuits 26a, 26b,..., 26h can be easily implemented by small-capacity memory circuits. In addition, the locations and circuit configurations of the synchronizing circuits 26a, 26b,..., 26h in the multi-channel recording/reproducing unit 12 may be variously changed.

For example, the synchronizing circuits 26a, 26b,..., 26h can be arranged on the input side of the data composition circuits 22a, 22b,..., 22h. In addition, the synchronizing circuits 26a, 26b,..., 26h may not be used, provided that the data composition circuits 22a, 22b,..., 22h are designed to perform the functions of the circuits 26a, 26b,..., 26h.

After the phases are adjusted by the synchronizing circuits 26a, 26b,..., 26h in this manner, the digital image data corresponding to the eight channels are supplied to an image data multiplexing circuit 27. The image data multiplexing circuit 27 multiplexes the input digital image data corresponding to the eight channels, and performs mapping processing for the image data as HDTV image data.

This mapping processing is generally performed by using a memory having a data storage capacity of one field or frame of an HDTV television signal. In this case, two one-field memories are prepared so that while data is written in one field memory, data is read out from the other field memory.

FIG. 8 shows the format of one-field image data obtained by multiplexing and mapping the digital image data corresponding to the eight channels using the image data multiplexing circuit 27. As a luminance signal Y and a color difference signal C which correspond to one field of this HDTV image data, the NTSC digital image data (including image, audio, and time codes) corresponding to four channels are arranged. Therefore, NTSC digital image data corresponding to eighth channels are multiplexed in one frame of HDTV image data.

The image data output from the image data multiplexing circuit 27 is supplied to an HDTV digital I/F (interface) encoder 28, and information indicating the presence of a blanking interval is added to the data. Thereafter, the data is converted into digital transmission data defined by the BTA S-002 (SMPTE 260M) specifications. This digital transmission data is extracted as a recorded signal from an output terminal 29 and supplied to the HDTV digital VTR 13.

In the reproduction signal processing section in FIG. 5, the digital transmission data reproduced by the HDTV digital VTR 13 is supplied to an HDTV digital I/F decoder 31 through an input terminal 30. The HDTV digital I/F decoder 31 separates a clock, a sync signal, and the like from the input digital transmission data, and extracts effective image data (1,920 sampled data in the horizontal direction and 520 lines in the vertical direction per field) excluding the blanking interval like the one shown in FIG. 8. Thereafter, the HDTV digital I/F decoder 31 outputs the resultant data to an image data demultiplexing circuit 32.

Similar to the image data multiplexing circuit 27 in FIG. 4, the image data demultiplexing circuit 32 includes a memory having a data storage capacity of two-field HDTV image data. The image data demultiplexing circuit 32 writes input HDTV image data (having the format shown in FIG. 8) in the memory, demultiplexes the data into NTSC digital data (having the format shown in FIG. 7) corresponding to eight channels, and reads it out from the memory.

The digital image data corresponding to the eight channels and output from the image data demultiplexing circuit 32 are respectively supplied to data separating circuits 33a, 33b,..., 33h arranged in correspondence with the respective channels. The data separating circuits 33a, 33b,..., 33h separate the input digital image data into digital image signals, digital audio signals, and digital time code signals TC.

The digital image signals separated by the data separating circuits 33a, 33b,..., 33h are extracted through output terminals 34a, 34b,..., 34h. The digital audio signals are extracted through output terminals 35a, 35b,..., 35h. The digital time code signals TC are extracted through output terminal 36a, 36b,..., 36h.

As mentioned previously, if the digital image and audio signals are transmitted through a serial transmission line specified by the "SMPTE 259M" specifications, the digital audio signals are combined with the digital image signals.

The digital time code signals TC separated by the data separating circuits 33a, 33b,..., 33h are supplied to a select circuit 37. The select circuit 37 selects one of the input digital time code signals TC corresponding to the eight channels on the basis of a select signal supplied from a control panel (not shown) through an input terminal 38, and outputs the selected signal to a time code switching circuit 39.

The time code switching circuit 39 switches the time code signal contained in a remote control signal conforming to the "RS-422" specifications and supplied to an input terminal 40 and the time code signal selected by the select circuit 37 on the basis of the select signal. The remote control signal whose time code signal has been switched is extracted from an output terminal 41 and output to another apparatus (e.g., an editing apparatus).

The time code signal contained in this remote control signal is time information read out from a time code track which the HDTV digital VTR 13 has as a basic function. The remote control signal is decoded by the time code switching circuit 39 such that only the time code signal is switched. Thereafter, the signal is encoded again and output to the output terminal 41.

With this function of switching time code signals, search and edition processing, e.g., operating a conventional NTSC digital VTR with respect to a desired one channel of the eight channels, can be performed after the program data are stored with the arrangement shown in FIG. 2.

In the above embodiment, since NTSC digital image data is mapped as HDTV image data without performing data compression, the NTSC digital image data corresponding to the eight channels can be simultaneously recorded on the cassette video tape 14. If NTSC digital image data are compressed to reduce the data amount, NTSC digital image data corresponding to eight channels or more can be mapped as HDTV image data.

In addition, if, for example, image data, other than NTSC digital image data, e.g., HDTV digital image data is compressed to reduce the data amount, a plurality of channels can be mapped in the format of the HDTV image data.

## Claims

1. A multi-channel recording/reproducing apparatus characterized by comprising:
a recording medium (14);
recording/reproducing means (13) for recording/reproducing first digital image data on/from said recording medium (14);
a recorded signal processing section for performing mapping processing for second digital image data corresponding to a plurality of channels, each having fewer sampled data in a horizontal or vertical direction than the first digital image data, to constitute the first digital image data, and supplying the data to said recording/reproducing means (13) to cause said means to record the data on said recording medium (14); and
a reproduction signal processing section for reconstructing the second digital image data corresponding to the plurality of channels from the image data reproduced from said recording medium (14) by said recording/reproducing means (13).

2. The apparatus according to claim 1, characterized in that said recorded signal processing section comprises:
a plurality of composition means (22a - 22h) for generating the second digital image data by combining image information, audio information, and time information; and
image data multiplexing means (27) for multiplexing the second digital image data corresponding to the plurality of channels and output from said plurality of composition means (22a - 22h) and performing mapping processing for the data to constitute the first digital image data.

3. The apparatus according to claim 2, characterized in that said recorded signal processing section comprises synchronizing means (26a - 26h) for absorbing phase differences between the second digital image corresponding to the plurality of channels and output from said plurality of composition means (22a - 22h).

4. The apparatus according to claim 1, characterized in that said reproduction signal processing section comprises:
image data demultiplexing means (32) for demultiplexing the image data reproduced from said recording medium (14) by said recording/reproducing means (13) into the second digital image data corresponding to the plurality of channels; and
a plurality of data separating means (33a - 33h) for separating the second digital image data corresponding to the plurality of channels and output from said image data demultiplexing means (32) into the image information, the audio information, and the time information.

5. The apparatus according to claim 4, characterized in that said reproduced signal processing section comprises:
selecting means (37) for selectively extracting time information from the pieces of time information corresponding to the plurality of channels and separated by said plurality of data separating means (33a - 33h); and
switching means (39) for switching the time information selected by said selecting means (37) and time information held by said recording/reproducing means (13).

6. The apparatus according to claim 1, characterized in that the first digital image data is HDTV data, and the second digital image data is NTSC data.
